(19) Europäisches Patentamt European Patent Office Office européen des brevets

(11) **EP 3 307 687 B1**

(12) **EUROPEAN PATENT SPECIFICATION**

(45) Date of publication and mention of the grant of the patent:
**07.06.2023 Bulletin 2023/23**

(51) International Patent Classification (IPC):
**C04B 14/02** *(2006.01)*      **C04B 14/04** *(2006.01)*
**C04B 14/06** *(2006.01)*      **C04B 20/00** *(2006.01)*
**C04B 20/02** *(2006.01)*

(21) Application number: **16722060.7**

(22) Date of filing: **18.04.2016**

(52) Cooperative Patent Classification (CPC):
(C-Sets available)
**C04B 28/02; C04B 14/06; C04B 18/023;**
B22C 1/00; C04B 2111/00482; C04B 2111/28;
Y02W 30/91                                   (Cont.)

(86) International application number:
**PCT/EP2016/058589**

(87) International publication number:
**WO 2016/202484 (22.12.2016 Gazette 2016/51)**

(54) **LIGHTWEIGHT FINE CERAMIC PARTICULATES**

LEICHTE FEINPARTIKEL

PARTICULES FINES LÉGÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2015 EP 15172193**

(43) Date of publication of application:
**18.04.2018 Bulletin 2018/16**

(73) Proprietor: **ZaaK Technologies GmbH**
**08064 Zwickau (DE)**

(72) Inventor: **KHAN, Abbas**
**08064 Zwickau (DE)**

(56) References cited:
EP-A1- 0 985 646        JP-A- 2000 026 142
US-A1- 2003 047 114

• "An initiative by Dr. Abbas Khan", , 31 December 2012 (2012-12-31), XP055228712, Retrieved from the Internet: URL:http://flyash2012.missionenergy.org/fi les/Zaak_ Mr Jagdish Shah.pdf [retrieved on 2015-11-16]

• Dale P Bentz ET AL: "Concrete international / OctOber 2006 39", , 1 October 2006 (2006-10-01), XP055229386, Retrieved from the Internet: URL:http://ciks.cbt.nist.gov/~bentz/lwatom oic.pdf [retrieved on 2015-11-18]

• YASAR E ET AL: "Strength properties of lightweight concrete made with basaltic pumice and fly ash", MATERIALS LETTERS, NORTH HOLLAND PUBLISHING COMPANY. AMSTERDAM, NL, vol. 57, no. 15, 1 April 2003 (2003-04-01) , pages 2267-2270, XP004852231, ISSN: 0167-577X, DOI: 10.1016/S0167-577X(03)00146-0

• R. WASSERMAN ET AL: "Interfacial interactions in lightweight aggregate concretes and their influence on the concrete strength", CEMENT AND CONCRETE COMPOSITES, vol. 18, no. 1, 1 January 1996 (1996-01-01), pages 67-76, XP055228702, GB ISSN: 0958-9465, DOI: 10.1016/0958-9465(96)00002-9

(52) Cooperative Patent Classification (CPC): (Cont.)

C-Sets
**C04B 14/06, C04B 20/026, C04B 20/04;**
**C04B 18/023, C04B 14/06, C04B 20/0076;**
**C04B 28/02, C04B 18/023, C04B 18/08**

**Description**

**Field of the Invention**

The present invention relates to lightweight fine ceramic particulates, their use in different technical fields including in building material compositions in combination with fly ash.

**Background of the Invention**

Indian Patent Application No. 3099/MUM/2011 discloses a method of producing sintered lightweight fine particulates like sintered sand from industrial wastes. The method of manufacturing lightweight fine particulates disclosed there comprises the steps of:

1. Blending and mixing fly ash with natural additives.
2. Formation of granules using a high intensity shear-mixer.
3. Fine particulates of different sizes and shapes are produced.
4. Particulates are dried and classified using powerful vibrating screens.
5. Particulates of desired sizes and shapes are sintered at high temperature (900-1,400 °C).

The global demand for sand or fine particulates in the building and construction and other industries is applying increasing pressure on the dwindling natural sources of sand. The sources of fine particulates for this purpose are a) natural sand from nullahs, creeks and rivers and b) crushed stones or manufactured sand. However, these alternative sand sources are drastically changing the landscape, destroying natural habitats and endangering the ecosystem. Furthermore, the destructive practice of sand extraction or mining are making it an increasingly unsustainable raw material.

The use of lightweight aggregates like pumice for mortar compositions is disclosed in EP 0 985 646 A1, for example. It is also known in the art to use lightweight aggregates that are made from naturally occurring aggregates like basaltic pumice. This is disclosed by Yasar, E., et al; "Strength properties of lightweight concrete made with basaltic pumice and fly ash", "MATERIALS LETTERS, NORTH HOLLAND PUBLISHING COMPANY. AMSTERDAM, NL, vol. 57, no. 15, 1 April 2003, pages 2267-2270", or Dale P. Bentz et al; "Water Movement during Internal Curing", "Concrete international/October 2006; pages 39 to 45".

Another prior art JP 2000 026142 A discloses a method for producing an artificial lightweight aggregate produced by granulating and firing coal ash generated in large quantities from a coal thermal power plant or the like. The artificial aggregate produced is suitably used mainly in the building field as an aggregate for lightweight concrete or mortar by utilizing the lightweight property and low water absorbency which are characteristics thereof. However, this prior art discloses about aggregate for concrete and not sand or fine particles, and does not disclose about sieve analysis in the size ranging from 0.5 to 2 mm nor about the bulk density of the aggregate.

Still another prior art US 2003/047114 A1 discloses a method of forming a lightweight fly ash aggregate together with the resultant fly ash aggregate. The prior art further discloses various aspects of the method of forming the lightweight fly ash aggregate including methods of forming fly ash slurry, briquettes, or lightweight fly ash particles. However, this prior art mainly discloses about lightweight aggregates and not sand or fine particles.

The problem to be solved is to provide lightweight fine particulates as a substitute for sand for building and construction purposes as well as other purposes.

**Summary of the Invention**

The problem is solved by providing lightweight fine ceramic particulates, directly obtained from fly ash, having a size distribution as given in Table A:

Table A

| Sieve size (mm) | 2 | 1 | 0.5 | 0.25 |
|---|---|---|---|---|
| Passing (mass-%) | >98 | 55 to 80 | 30 to 45 | 2 to 4 |

According to the invention lightweight fine ceramic particulates are preferred, wherein the passing mass for the 1 mm sieve size is in the range of 60 to 70 %.

According to the invention lightweight fine ceramic particulates are also preferred, wherein the passing mass for the 0.5 mm sieve size is in the range of 35 to 40 %.

Preferred are also lightweight fine ceramic particulates, wherein the bulk density is in the range of 600 to 1,200 kg/m$^3$.

Preferred are also lightweight fine ceramic particulates, wherein the water absorption is in the range of 6 to 15 % by weight.

Especially preferred are lightweight fine ceramic particulates, wherein the water absorption is higher than 10 % by weight after 30 minutes.

Especially preferred are lightweight fine ceramic particulates, wherein the water absorption is higher than 10 % by weight after 30 minutes.

A further object of the present invention is the use of lightweight fine ceramic particulates, according to the invention, as aggregate for construction purposes.

A use, according to the present invention is preferred, wherein the lightweight fine ceramic particulates are used in combination with fly ash.

A use, according to the present invention is also preferred, wherein the fly ash is produced during combustion of stone coal and/or brown coal.

A further object of the present invention is the use of lightweight fine ceramic particulates, according to the invention, as additive in paint or coating formulations.

A further object of the present invention is the use of lightweight fine ceramic particulates, according to the invention, as foundry sand.

A further object of the present invention is the use of lightweight fine ceramic particulates, according to the invention, as additive in waste water treatment.

A further object of the present invention is the use of lightweight fine ceramic particulates, according to the invention, as substrate for horticultural purposes.

A further object of the present invention is the use of lightweight fine ceramic particulates, according to the invention, in hydroponic gardening.

A further object of the present invention is the use of lightweight fine ceramic particulates, according to the invention, in green roofing purposes.

A further object of the present invention is the use of lightweight fine ceramic particulates, according to the invention, in applications in geotechnics.

Another object of the present invention is the use of lightweight fine ceramic particulates, according to the invention, in a building material composition in combination with fly ash.

Preferred is a building material composition, wherein the fly ash is derived from stone coal and/or brown coal.

Especially preferred is a building material composition, wherein the building material is a concrete composition.

It is further preferred that the density of the hardened concrete derived from the building material composition is less than 2,100 kg/m$^3$

It is also preferred that the thermal conductivity of the hardened concrete is less than 0.9 W/(m•K).

Especially preferred is a building material composition, wherein the building material is a mortar composition.

It is further preferred that the density of the hardened mortar is less than 1,800 kg/m$^3$

It is also preferred that the thermal conductivity of the hardened mortar is less than 0.7 W/(m•K).

Preferred is also a building material composition, in form of a mortar, wherein the ratio of compressive strength to the flexural strength of the hardened mortar is between 4 : 1 to 7 : 1.

The lightweight fine ceramic particulates, of the present invention, have a size distribution as given in Table A:

Table A

| Sieve size (mm) | 2 | 1 | 0.5 | 0.25 |
|---|---|---|---|---|
| Passing (mass-%) | >98 | 55 to 80 | 30 to 45 | 2 to 4 |

obtainable by providing a raw material consisting of at least 50 % by weight of fly ash, the remainder being naturally occurring mineral additives and/or processing aids, forming granules out of the provided raw material, drying and classifying the formed granules and sintering the formed granules at high temperature in a range of 900 to 1,400 °C, without performing any further mechanical process step.

Various other features and advantages will appear from the description to follow. In the description, reference is made to the accompanying drawings which form a part thereof, and in which are shown by way of illustration, various embodiments for practicing the invention. The embodiments will be described in sufficient detail to enable those skilled in the art to practice the invention, and it is to be understood that other embodiments may be utilized and that structural changes may be made without departing from the scope of the invention. The following detailed description is therefore not to be taken in a limiting sense, and the scope of the present invention is defined by the appended claims.

**Brief Description of the Drawings**

The present invention is explained in more details by means of the accompanied drawings.
The Figures show:

Fig. 1: Particle grading of normal sand and ZaaKSand (DIN EN 933-1);
Fig. 2: Determination of the water demand for ZaaKSand mortar;
Fig. 3: Water demand of mortar mixes;
Fig. 4: Consistency of fresh mortar mixes;
Fig. 5: Density of fresh mortar mixes;
Fig. 6: Density of hardened concrete at the age of 28 days;
Fig. 7: Compressive strength and flexural strength of mortars; and
Fig. 8: Thermal conductivity of mortar mixes at the age of 28 days.

**Detailed Description of the Invention**

Definitions:

"ZaaKSand"

The lightweight fine ceramic particulates according to the invention are referred herein, within the present description of the invention, to the expression "ZaaKSand". This means that the expression "ZaakSand" used herein refers to and describes the lightweight fine ceramic particulates according to the invention. The expression "ZaakSand" used herein refers to and describes also sintered synthetic sand according to the invention.

"Lightweight fine ceramic particulates"

As used within the present description the term "lightweight fine ceramic particulates" refers to man-made particulates. The production process involves at least one heating process in order to introduce ceramic properties into the particulates.

"Directly obtained"

As used within the present description the term "directly obtained" refers to a production process which does not involve any further mechanical process like crushing, grinding, milling, flouring, pulverizing, kibbling, sieving, sifting, grading, screening, sorting, classifying, and the like. The "lightweight fine ceramic particulates" according to the invention are directly obtained from fly ash, which means the final process step is the heating process for introducing ceramic properties as defined in claim 1.
After that final step no further process steps are performed.

"Building material composition"

As used within the present description the term "building material composition" is any material or material composition which is used for construction purposes and wherein fine particulates like sands, are present. The "building material composition" contains i. a. aggregates, binders, fillers, sand, cement, gravel, chips, grit, and other materials suitable for construction purposes.
Water may be also part of a "building material composition" in the sense of the present description.

"Aggregate for construction purposes"

As used within the present description the term "aggregate for construction purposes" or "aggregate" is any material that resists compressive stress and provides bulk to the building material composition. "Aggregates" may be, in the context of the present description, selected from sand, synthetic sand, lightweight fine particulates, ash, fly ash, gravel, grit and the like. An "aggregate" may also be "ZaakSand" as described in the context of the present description.

"Mortar"

As used within the present description the term "mortar" refers to a workable paste, comprising at least sand, binder and water, to bind building blocks and to fill and cover gaps in between the blocks, and to create surfaces on walls, ceilings and floors. For different uses, a wide range of sands and binders are used. The term "mortar", as used in the present description, will also include all types of aggregates, like sand and/or binders, that are suitable to fulfil the demands of mortar, wherein the aggregates may be also selected from lightweight fine particulates, synthetic sand, fly ash, ash, and the like. The term "mortar", as used within the present description, refers also to all uses of "mortar", like plastering, rendering or for masonry purposes.

"Concrete"

As used within the present description the term "concrete" refers to a composite material consisting at least out of water, "aggregate" and cement. Especially in respect to "aggregates" used, no limitation is given in respect to the present description. All kinds of "aggregate for construction purposes" as defined above may be used to form concrete as it is to be understood in the context of the present invention.

"Fly ash"

As used within the present description the term "fly ash" or "ash" refers to ash produced during combustion of coal. The term "fly ash" or "ash" is not restricted to the type of coal used in combustion. Any type of coal may be used, for example lignite coal, brown coal, soft coal, sub-bituminous coal, stone coal, anthracite, hard coal, bituminous coal, black coal, mineral coal, and the like.

It was surprisingly found that lightweight fine ceramic particulates, directly obtained from fly ash, provide advantageous properties when used in different applications or for different purposes. The lightweight fine ceramic particulates according to the invention are characterized by means of a grading that is expressed by the results of sieve analyses. It has been surprisingly found that the following grading as given in Table A, namely

Table A

| Sieve size (mm) | 2 | 1 | 0.5 | 0.25 |
|---|---|---|---|---|
| Passing (mass-%) | >98 | 55 to 80 | 30 to 45 | 2 to 4 |

provides advantageous properties. The grading, or in other words, the distribution of particle sizes (size distribution), provides building material compositions, especially mortar and concrete compositions, that show better properties than those compositions that comprise normal sand instead of the lightweight fine ceramic particulates according to the invention. These properties are, for example, density, compressive strength, flexural strength and thermal conductivity. These advantageous properties are explained and described below in the accompanied examples and figures.

Furthermore, one great advantage of the lightweight fine ceramic particulates, directly obtained from fly ash, according to the invention fulfil the requirements of Indian Standards IS 2116 (1980) (Sand for masonry mortars - Specification) and IS 1542 (1992) (Sand for plaster) at the same time. This means that the lightweight fine ceramic particulates, directly obtained from fly ash, according to the invention, can be used according to Indian Standards without any further processing. The same applies to DIN EN 13055-1 (Lightweight aggregates - Part 1: Lightweight aggregates for concrete, mortar and grout). The lightweight fine ceramic particulates, directly obtained from fly ash, according to the invention, fulfil the main standard requirements so that their use as aggregate is safe and in conformity with International standards.

A person skilled in the art will find that the lightweight fine ceramic particulates according to the invention can easily be used as aggregate for building material compositions. The common aggregate in building material compositions is sand or gravel in different grading. Especially sand with a maximum particle size of 2 mm can easily be substituted by the lightweight fine ceramic particulates according to the invention. This substitution of normal sand with lightweight fine ceramic particulates according to the invention may be performed partially in order to adjust the properties of the resulting building material compositions (mortar or concrete) to the demands of the building or the construction to be established.

The lightweight fine ceramic particles according to the invention, herein called "ZaaKSand", present a great variety of advantageous properties.

*Lightweight*

ZaaKSand is up to 50 % lighter than normal sand benefiting improved structural efficiency, vertical urbanisation, reduced seismic forces impacts, and lower transportation costs.

Replacing natural sand with ZaaKSand leads to reduction in the dead-load of the concrete structure, which will allow structural engineers or designers to reduce the size of columns, footing and other load bearing elements. Concrete made from ZaaKSand can be up to 17 % lighter than ordinary concrete resulting in saving energy, intensive steel reinforcement and cement.

*Superior quality & workability*

Natural sand and manufactured sand are known for their irregular shapes, uneven gradation and impurities. The blending of these sands has been limited as it reduces the workability while finishing becomes a problem. Natural sand often contains impurities such as carbon, bones, shells, mica and silt which make it inferior for the use in cement mortar and concrete. The decay of these materials, due to weathering effects, shortens the life of the mortar and concrete.

ZaaKSand is regular in shape, size and even gradation, and in combination with being light weighted offers excellent workability in fresh mortars and concrete. ZaaKSand is the world's purest construction sand material as it has zero organic impurities and negligible silt content.

*Sound insulation*

With its micro-porous structure ZaaKSand can absorb noise resulting in acoustic comfort from increased sound insulation of concrete, blocks, plaster, renders and walls made of ZaaKSand.

*High performance concrete*

ZaaKSand can provide stiffness similar to the stiffness of cement paste matrix resulting in fewer micro-cracks compared to normal density aggregates. The uniform stress distribution provides enhanced durability in demanding environments and less permeability of the concrete as compared to normal weight concrete. These characteristics combined with uniform distribution, low silt content (<0.2 %) and low density (MBV - mass by volume) (<1.0 mg/g) proof that ZaaKSand can be used to make high performance concrete with significant advantage.

*Lower Transportation Cost - Lightweight*

Transportation cost is directly related to weight. ZaaKSand or lightweight aggregates used in precast, ready-mix concrete and masonry demonstrate an economic and environmental advantage.

A study showed that the transportation cost savings are up to seven times greater than the additional cost of lightweight aggregate used to reduce the concrete density. Additionally, fewer trucks in congested cities are not only an environmental necessity but will also generate fewer public complaints.

*Sustainability of the work force - Ergonomics*

According to the Center for Infrastructure Research, University of Nebraska at Lincoln, often masons retire before the expected retirement due to crippling back and shoulder injuries from the heavy lifting. The result is not only the loss of skilled labour, but also an increase in health costs.

Lightweight concrete, panels and blocks reduce the physical demands on labour and equipment, resulting in fewer injuries and worker's compensation claims, as well as extending equipment life.

*Internal Curing*

Typically, replacing normal coarser aggregates with lightweight aggregates (LWA) provides significant reduction in settlement and plastic shrinkage, cracking of mortars and concretes. This is due to the phenomenon called, *internal curing, defined as* "supplying water throughout a freshly placed cementitious mixture using reservoirs, via pre-wetted lightweight aggregates, that readily release water as needed for hydration or to replace moisture lost through evaporation or self-desiccation".

Buildings made from LWA have shown excellent durability. The amazing Pantheon Dome, Rome, Italy, was built in 125 AD and is still standing today as testament to the durability of lightweight concrete material. The Pantheon Dome is made from natural lightweight aggregate, pumice.

*Sustainability from internal curing*

Internal curing may have been originally developed to reduce autogenous shrinkage and mitigate early-age cracking in high performance concretes, it has now become a strong potential to contribute to a more sustainable infrastructure in a variety of ways. Internal curing not only contributes to a more efficient hydration of the cement in a concrete mixture, but also increases service life of concrete structures. This results in small but significant reductions in cement content and steel content in many concrete mixtures, thereby significantly reducing the carbon footprint of each cubic meter of concrete used throughout the world.

According to the invention it is proposed to use ZaaKSand in different applications in different technical fields.

Using ZaaKSand in green roofing and horticulture will reduce dead load of the roof. It is non-toxic, odourless, inert, does not degrade, decompose, or react with agricultural or horticultural chemicals.

Using Lightweight Sand in green roofing and horticulture will reduce dead load of the roof. It is non-toxic, odourless, inert, does not degrade, decompose, or react with agricultural or horticultural chemicals,

Lightweight Sand will resist compaction, improves aeration and can be incorporated into engineered structural soil to support healthy plant growth and improve drainage while allowing access by heavy emergency vehicles to the edges of buildings. Lightweight Sand can enhance soil resiliency to climate changes by reducing nutrient loss and improving moisture retention.

These properties make the use of Lightweight Sand in the field of gardening extremely advantageous.

It has to be pointed out that the use of the lightweight fine ceramic particulates according to the invention is not limited to the herein given examples. Whenever sand may be substituted by the lightweight fine ceramic particulates according to the invention, called "Lightweight Sand" the use is not limited for example to mixtures of cement to Lightweight Sand in the ratio of 1 to 3 or 1 to 4 as measured by weight or volume. As demanded by the intended use the ratio of cement to Lightweight Sand may also range from 1 to 5 or 1 to 6. Any ratio that is suitable to achieve the prescribed properties falls into the scope of the present invention when using Lightweight Sand as aggregate for mortar or concrete formulations.

It shall be pointed out that the same applies to the substitution of Lightweight Sand or sand by ash or fly ash. As given herein in the examples, Lightweight Sand was replaced up to 10 % by weight or volume with fly ash, But it is also in the sense of the present application that the substituted amount may also be less than 5 %, less than 10 %, 15 % or 25 % or 30 % or even more, if demanded by the properties to be reached.

Another great advantage of the lightweight fine ceramic particulates according to the invention is that it is possible to produce the lightweight fine ceramic particulates easily out of fly ash produced during combustion of coal. The lightweight fine ceramic particulates according to the invention are mainly made from a waste material that would have to be disposed otherwise. The production process is very simple and reliable and provides the lightweight fine ceramic particulates according to the invention directly.

On the other hand, the lightweight fine ceramic particulates according to the invention can also be produced by sieving or sizing techniques as known in the art.

## Examples

The following examples shall explain the invention in more details without being understood to restrict the scope of the invention to the presented examples.

## Example 1

Sieve analysis

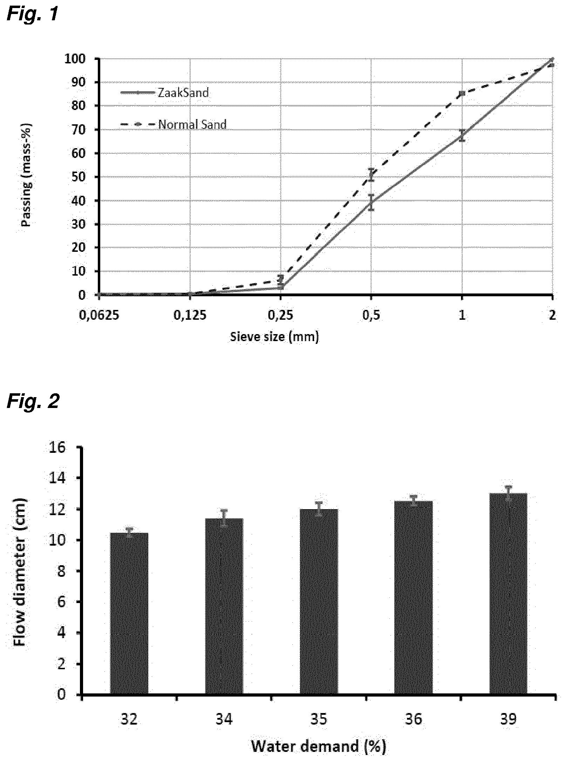

To compare the grading of ZaaKSand with the grading of normal sand, two samples from each type (w = 5000 g) have been dried in the oven and have been tested according to DIN EN 933-1. Table 1 shows the result of sieve analysis, while Figure 1 shows the grading of both normal sand and ZaaKSand. As can be shown from Figure 1, there are some differences between the grading of ZaaKSand and normal sand. ZaaKSand is quite coarser than normal sand.

Table 1: Sieve analysis results of ZaaKSand and normal sand

| Sieve size (mm) | 0 | 0.063 | 0.125 | 0.25 | 0.5 | 1 | 2 |
|---|---|---|---|---|---|---|---|

(continued)

| | | | | | | | | |
|---|---|---|---|---|---|---|---|---|
| ZaaKSand 1 | | 0 | 0.245 | 0.405 | 3.1 | 40.05 | 68.41 | 99.985 |
| ZaaKSand 2 | Passing (mass-%) | 0 | 0.39 | 0.45 | 2.64 | 35.54 | 65 | 99.98 |
| Normal sand 1 | | 0 | 0.058 | 0.34 | 4.846 | 48.526 | 84.68 | 97.358 |
| Normal sand 2 | | 0 | 0.098 | 0.42 | 8.266 | 83.412 | 85.472 | 96.82 |

**Example 2**

Loose density, particle density and water absorption of ZaaKSand

To determine the density (loose bulk density) and the water absorption of ZaaKSand, the aggregate sample was dried in the oven at a temperature of 110 $\pm$ 5 °C according to DIN EN 1097-3 until a constant weight and then cooled down to the room temperature. Thereafter, a container with known volume V (cm$^3$) and mass $m_1$ (g) has been filled with the aggregate sample without compaction and the total mass of the filled container has been determined as $m_2$ (g). The loose density ($\rho_l$) has been calculated according to the following formula:

$$\rho_l = \frac{m_2 - m_1}{V}$$

The particle density ($\rho_p$) has been measured according to DIN EN 1097-6 using the pycnometer method. It has been determined by dividing the mass of a certain volume of the dry aggregate by the mass of water occupying the same volume. The following formula is used to calculate the particle density ($\rho_p$) of aggregate:

$$\rho_p = \rho_w * \frac{m_5}{m_5 - (m_3 - m_4)}$$

Where:

$\rho_w$ is the density of water (g/cm$^3$).
$m_3$ is the mass of the pycnometer filled with water and the aggregate sample (g).
$m_4$ is the mass of the pycnometer filled with water (g).
$m_5$ is the mass of the dry sample (g).

The water absorption of ZaaKSand has been measured according to DIN EN 1097-6. The water absorption has been measured at different times: 30 min, 60 min and 24 hours. The following formula has been used to calculate the water absorption:

$$W_A\% = \frac{100 * (m_0 - m_5)}{m_5}$$

Where $m_0$ is the mass of the water-saturated aggregate with dry surface in g. Table 2 shows the results of density and water absorption tests.

Table 2:

| Loose bulk density, particle density and water absorption of ZaaKSand | | | | |
|---|---|---|---|---|
| Particle density g/cm$^3$ | Loose density g/cm$^3$ | Water absorption % | | |
| | | 30 minutes | 60 minutes | 24 hours |
| 2 $\pm$ 0.03 | 0.85 $\pm$ 0.02 | 14.20 $\pm$ 1.3 | 15.50 $\pm$ 2 | 17.70 $\pm$ 1.8 |

**Example 3**

Performance of ZaaKSand in mortar

To study the behavior of ZaaKSand in cement mortar as fine aggregate, three mortar mixes have been prepared and several tests have been carried out. The first mortar mix has been prepared according to DIN EN 196-1 by using normal sand. The cement to sand ratio was 1 to 3 and the water to cement ratio was 0.5 according to the standard (the water demand is 12.5%). The used cement is CEM I 42.5 R. The second mix has been made by replacing 100 % of normal sand with ZaaKSand (by volume). The third mortar mix has been made by replacing 100 % of normal sand with 90 % ZaaKSand and 10 % fly ash. For the second mix, several trials have been carried out in order to determine the water demand that give an acceptable consistency as can be seen in Figure 2.

Properties of fresh mortar

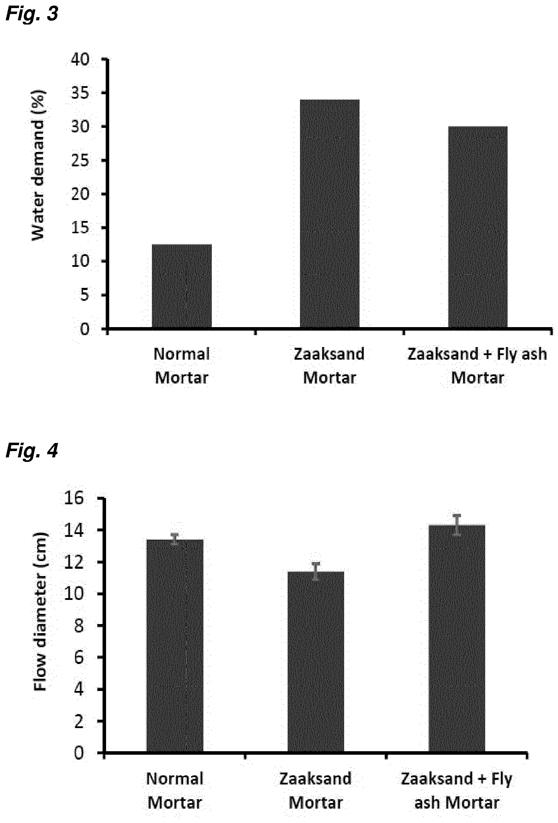

As can be seen from the results of sieve analysis, there are some differences between the grading of ZaaKSand and normal sand. In order to eliminate the effect of this difference on the properties of mortar, ZaaKSand has been sieved, fractionated and remixed in such a way that the grading was the same as that of normal sand.
The mixing procedures of the mortar have been performed according to DIN EN 196-1. The flow diameter and density of fresh mortar have been measured according to DIN EN 1015-3 and 1015-6 respectively. The results of water demand, consistency and density tests of the three mortars are presented in Figures 3, 4 and 5 respectively.

Properties of hardened mortar

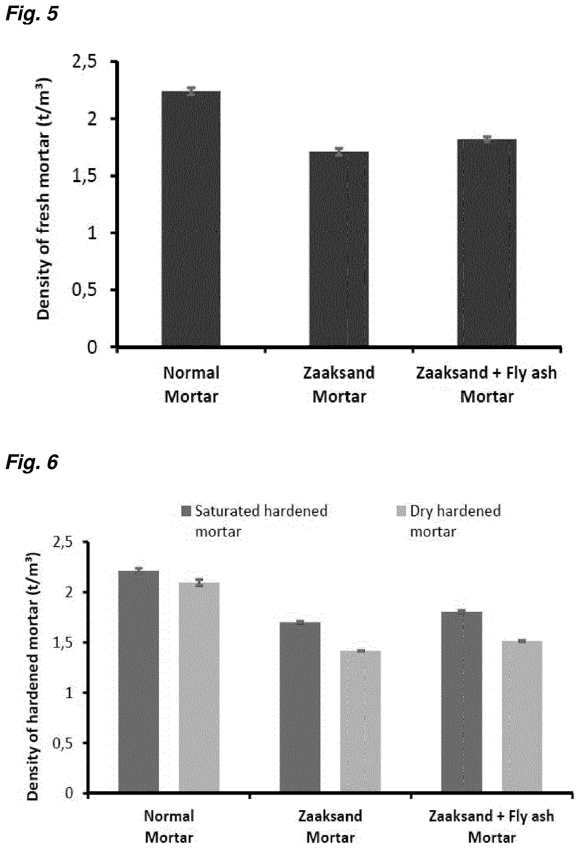

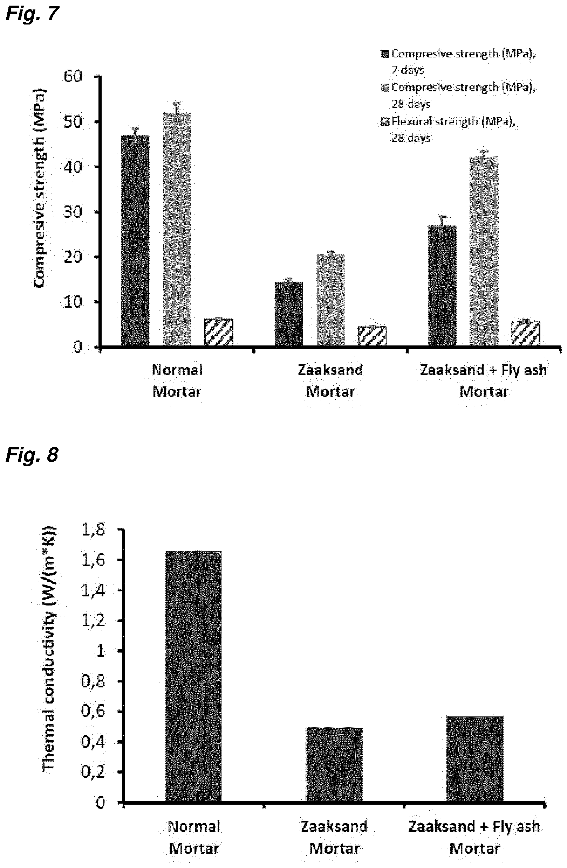

After mixing the mortar, the moulds (40*40*160 mm) have been filled and kept in the standard conditions for 24 hours. Then, the samples were demoulded and cured under water until testing.
After 7 days, the compressive strength has been measured for the three mixes. At the age of 28 days, the density of hardened mortar has been measured according to DIN EN 1015-10 (Figure 6).
In addition, the flexural strength and compressive strength at the age of 28 days have been measured according to DIN EN 1015-11 (Figure 7).
For measuring thermal conductivity, two tiles with dimensions of 200*200*50 mm from each mix have been made.
After 28 days, the plates have been dried until constant weight. After cooling down to the room temperature, the thermal conductivity test has been performed for each mix according to DIN EN 12667 and 12664. The results of the thermal conductivity test are presented in Figure 8.

**Example 4**

Compressive strength category

Two mortar formulations have been prepared and the compressive strength after 28 days according to DIN EN 998-1 has been measured.
The first formulation was prepared according to Example 3 with a cement to ZaakSand ratio of 1 to 3.
The second formulation was also prepared according to Example 3, but the cement to ZaakSand ratio was 1 to 4.
Compressive strength was measured and exceeds 20 N/mm$^2$ for the first formulation (1 to 3 ratio) as given in Figure 7. The second formulation (1 to 4 ratio) provided a compressive strength of > 10 N/mm$^2$.
In respect to the compressive strength of hardened mortar different classes have been defined in DIN EN 998-1.

| Hardened Mortar Classes according to DIN EN 998-1 | |
|---|---|
| Category | compressive strength after 28 days |
| CS I | 0.4 - 2.5 N/mm$^2$ |
| CS II | 1.5 - 5.0 N/mm$^2$ |
| CS III | 3.5 - 7.5 N/mm$^2$ |
| CS IV | $\geq$6 N/mm$^2$ |

Majority of lightweight mortars according to the state of the art fall into CS II and sometimes into CS III. However, ZaaKSand based mortar exceeds 20 N/mm$^2$ for 1 to 3 cement to sand ratio and exceeds 10 N/mm$^2$ for 1 to 4 cement to sand ratio - a significant advantage over existing commercial lightweight mortars. As per the above given categories, the mortar according to the invention falls into category CS IV.

This means that the mortar, prepared using the lightweight fine ceramic particulates according to the invention, shows a much higher compressive strength than comparable mortars of the state of the art, while even being lighter than those as known in the art.

**Example 5**

Typical plaster formulations

In the following tables different embodiments of mortar formulations, prepared using the lightweight fine ceramic particulates according to the invention, are described.

**Plaster Formulations**

| Formulation A (Cement: ZaaKSand = 1: 3) | |
|---|---|
| Item | Litre |
| Cement | 1.0 |
| ZaaKSand | 3.0 |
| Fly ash | 0.0 |
| Water | 3.0 |

| Formulation B (Cement: ZaaKSand = 1: 3) | |
|---|---|
| Item | Litre |
| Cement | 1.0 |
| ZaaKSand | 2.7 |
| Fly ash | 0.3 |
| Water | 2.64 |

| Formulation C (Cement: ZaaKSand = 1: 4) | |
|---|---|
| Item | Litre |
| Cement | 1.0 |
| ZaaKSand | 4.0 |
| Fly ash | 0.0 |
| Water | 4.05 |

| Formulation D (Cement: ZaaKSand = 1: 4) | |
|---|---|
| Item | Litre |
| Cement | 1.0 |
| ZaaKSand | 3.57 |
| Fly ash | 0.43 |
| Water | 3.57 |

Formulations A and B are based on a cement to ZaakSand ratio of 1 to 3, whereas formulations C and D are based on a cement to ZaakSand ratio of 1 to 4.

Furthermore, formulations A and C are free of fly ash, whereas in formulations B and D fly ash is added to replace ZaakSand partly.

The variation of the ratio of cement to ZaakSand, and the partly substitution of ZaakSand with fly ash, allows the adjustment of the properties of the mortar to the respective needs of the construction to be performed.

The examples and embodiments shown above are intended to be merely exemplary and those skilled in the art shall be able to make numerous variations and modifications to it.

The scope of the present invention is defined in the appended claims.

## Claims

1. Lightweight fine ceramic particulates, directly obtained from fly ash, by providing a raw material comprising at least 50 % by weight of the fly ash, and the remainder being naturally occurring mineral, additives and/or processing aids, forming granules out of the provided raw material; drying and classifying the formed granules; sintering the formed granules at high temperature in a range of 900 to 1,400 °C, without performing any further mechanical process step, and having a size distribution as given in Table I:

Table I

| Sieve size (mm) | 2 | 1 | 0.5 | 0.25 | |
|---|---|---|---|---|---|
| Passing (mass-%) | >98 | 55 to 80 | 30 to 45 | 2 to 4 | |

2. The lightweight fine ceramic particulates as claimed in claim 1, wherein the fly ash is produced during combustion of lignite coal, brown coal, soft coal, sub-bituminous coal, stone coal, anthracite, hard coal, bituminous coal, black coal, or mineral coal.

3. The lightweight fine ceramic particulates as claimed in claim 1, wherein bulk density of the fine ceramic particulates is in range of 600 to 1,200 kg/m$^3$.

4. The lightweight fine ceramic particulates as claimed in claim 1, wherein water absorption is higher than 10 % by weight after 30 minutes, as tested according to DIN EN 1097-6.

**5.** Use of the lightweight fine ceramic particulates as claimed in claim 1, as aggregate for construction purposes.

**6.** Use of the lightweight fine ceramic particulates as claimed in claim 5, in combination with the fly ash.

**7.** Use of the lightweight fine ceramic particulates as claimed in claim 1, as additive in paint or coating formulatons or as foundry sand, or as additive for waste water treatment, or as substrate for horticultural purposes, or for hydroponic gardening, or for green roofing purposes, or for applicatons in geotechnics.

**8.** Use of the lightweight fine ceramic particulates as claimed in claim 1 in a building composition in combination with fly ash.

**Patentansprüche**

**1.** Leichte, feine keramische Teilchen, die direkt aus Flugasche gewonnen werden, durch Bereitstellen eines Rohmaterials, das mindestens 50 Gewichts-% Flugasche enthält, wobei der Rest aus natürlich vorkommenden mineralischen Zusätzen und/oder Verarbeitungshilfsmitteln besteht; Formung von Granulat aus dem bereitgestellten Rohmaterial; Trocknen und Klassifizieren des geformten Granulats; Sintern des geformten Granulats bei hoher Temperatur im Bereich von 900 bis 1400 °C, ohne Durchführung eines weiteren mechanischen Verfahrensschritts, und mit einer Größenverteilung wie in Tabelle I angegeben:

Tabelle I

| Siebgröße (mm) size | 2 | 1 | 0.5 | 0.25 |
|---|---|---|---|---|
| Durchgang (Masse-%) | >98 | 55 to 80 | 30 to 45 | 2 to 4 |

**2.** Leichte feine keramische Teilchen nach Anspruch 1, wobei die Flugasche bei der Verbrennung von Braunkohle, Weichkohle, subbituminöser Kohle, bituminöser Kohle, Steinkohle, Hartkohle oder Anthrazit, entsteht.

**3.** Leichte feine keramische Teilchen nach Anspruch 1, wobei die Schüttdichte der feinen keramischen Teilchen im Bereich von 600 bis 1.200 kg/m3 liegt.

**4.** Leichte feine keramische Teilchen nach Anspruch 1, wobei die Wasseraufnahme nach 30 Minuten mehr als 10 Gewichts-% beträgt, geprüft nach DIN EN 1097-6.

**5.** Verwendung der leichten, feinen Keramikpartikel nach Anspruch 1 als Zuschlagstoff für bauliche Zwecke.

**6.** Verwendung der feinen leichten keramischen Teilchen nach Anspruch 5 in Kombination mit Flugasche.

**7.** Verwendung der leichten, feinen keramischen Teilchen nach Anspruch 1 als Zusatzstoff in Farben oder Beschichtungen oder als Gießereisand oder als Zusatzstoff für die Abwasserbehandlung oder als Substrat für Gartenbauzwecke oder für hydroponischen Gartenbau oder für die Dachbegrünung oder für Anwendungen in der Geotechnik.

**8.** Verwendung der leichten, feinen keramischen Teilchen nach Anspruch 1 in einer Baukomposition in Kombination mit Flugasche.

**Revendications**

**1.** Particules céramiques fines légères, directement obtenues à partir de cendres volantes, en fournissant une matière première comprenant au moins 50 % en poids de cendres volantes, et le reste étant des additifs minéraux et/ou des auxiliaires de traitement d'origine naturelle ; en formant des granules à partir de la matière première fournie ; en séchant et en classant les granules formés ; en frittant les granules formés à haute température dans une gamme de 900 à 1400 °C, sans effectuer aucune autre étape de traitement mécanique, et ayant une distribution de taille telle que donnée dans le tableau I :

Tableau I

| Taille du tamis (mm) | 2 | 1 | 0.5 | 0.25 |
|---|---|---|---|---|
| Passages (% en masse) | >98 | 55 to 80 | 30 to 45 | 2 to 4 |

2. Particules céramiques fines légères selon la revendication 1, dans lesquelles les cendres volantes sont produites pendant la combustion de charbon de lignite, de lignite, de charbon tendre, de charbon sub-bitumineux, de charbon de pierre, d'anthracite, de houille, de charbon bitumineux, de charbon noir ou de charbon minéral.

3. Particules céramiques fines légères selon la revendication 1, dans lesquelles la densité apparente des particules céramiques fines est comprise entre 600 et 1200 kg/m3.

4. Particules céramiques fines légères selon la revendication 1, dans lesquelles l'absorption d'eau est supérieure à 10 % en poids après 30 minutes, comme testé selon la norme DIN EN 1097-6.

5. Utilisation des particules céramiques fines légères selon la revendication 1, comme agrégat à des fins de construction.

6. Utilisation des particules céramiques fines légères selon la revendication 5, en combinaison avec les cendres volantes.

7. Utilisation des fines particules céramiques légères selon la revendication 1, comme additif dans des formulations de peinture ou de revêtement, ou comme sable de fonderie, ou comme additif pour le traitement des eaux usées, ou comme substrat à des fins horticoles, ou pour le jardinage hydroponique, ou pour des toitures vertes, ou pour des applications en géotechnique.

8. Utilisation des fines particules céramiques légères selon la revendication 1 dans une composition de construction en combinaison avec des cendres volantes.

*Fig. 1*

*Fig. 2*

*Fig. 3*

*Fig. 4*

*Fig. 5*

*Fig. 6*

**Fig. 7**

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 3099MUM2011
- EP 0985646 A1

- JP 2000026142 A
- US 2003047114 A1

### Non-patent literature cited in the description

- Strength properties of lightweight concrete made with basaltic pumice and fly ash. **YASAR, E. et al.** MATERIALS LETTERS. NORTH HOLLAND PUBLISHING COMPANY, 01 April 2003, vol. 57, 2267-2270

- **DALE P. BENTZ et al.** Water Movement during Internal Curing. *Concrete international,* October 2006, 39-45